# EUROPÄISCHE PATENTANMELDUNG

(11) **EP 4 811 584 A1**
(43) Veröffentlichungstag der Anmeldung: **23.09.2026**
(21) Anmeldenummer: 25165040.4
(22) Anmeldetag: 20.03.2025
(51) Int. Cl.: H02J 3/00

(54) **VERFAHREN, NETZANSCHLUSSPRÜFUNG, STEUERUNGSVERFAHREN UND COMPUTERPROGRAMMPRODUKT ZUR ERMITTLUNG UND VERWENDUNG EINER NETZTOPOLOGIE EINES STROMNETZES**

(71) Anmelder: Siemens Aktiengesellschaft, 80333 München (DE)
(72) Erfinder: Metzger, Michael, 85570 Markt Schwaben (DE); Stursberg, Paul, 80469 München (DE); Tomaselli, Domenico, 1020 Wien (AT)
(74) Vertreter: Siemens Patent Attorneys

(57) **Zusammenfassung**

Der Gegenstand der Erfindung betrifft ein Verfahren zur Ermittlung einer Netztopologie eines Stromnetzes, wobei die Netztopologie des Stromnetzes durch mehrere Leitungen und Schalter gebildet wird. Das Verfahren umfasst:
- (102) Bereitstellen einer Wahrscheinlichkeitsverteilung möglicher Betriebstopologien des Stromnetzes für mehrere Zeitpunkte;
- (104) Ermittlung einer Wahrscheinlichkeit für das Vorhandensein einer Leitung zu jedem Zeitpunkt für jeden Zeitpunkt basierend auf der jeweiligen Wahrscheinlichkeitsverteilung;
- (106) Ermittlung einer Leitung als schalterfrei, wenn die Anzahl der Zeitpunkte, zu denen die Leitung eine Wahrscheinlichkeit größer oder gleich einem ersten Schwellenwert, insbesondere 0,5, aufweist, größer oder gleich einem festgelegten Häufigkeitswert ist;
- (108) Ermittlung einer Leitung als schaltbar, wenn die Leitung für mindestens einen der Zeitpunkte eine Wahrscheinlichkeit kleiner oder gleich einem zweiten Schwellenwert, insbesondere 0,25, und für mindestens einen der anderen Zeitpunkte eine Wahrscheinlichkeit größer oder gleich einem dritten Schwellenwert, insbesondere 0,75, aufweist;
- (110) Hinzufügen der ermittelten schalterfreien Leitungen als feste Leitungen zur Netztopologie; und
- (112) Hinzufügen der ermittelten schaltbaren Leitungen als Schalter zur Netztopologie.

Weiterhin betrifft die Erfindung eine Netzanschlussprüfung, ein Steuerungsverfahren für ein Stromnetz sowie ein Computerprogrammprodukt.

## Beschreibung

Die vorliegende Erfindung bezieht sich auf die Ermittlung und Verwendung von Netztopologien von Stromnetzen, insbesondere auf ein Verfahren zur Ermittlung einer Netztopologie eines Stromnetzes gemäß Anspruch 1, einer Netzanschlussprüfung gemäß Anspruch 9, ein Steuerungsverfahren gemäß Anspruch 11 und ein Computerprogrammprodukt gemäß Anspruch 13.

Netzbetreiber beziehungsweise Stromnetze stehen aufgrund der zunehmenden Verbreitung von dezentralen erneuerbaren Energiequellen, wie beispielsweise Photovoltaikanlagen, Ladestationen für Elektrofahrzeuge und/oder Wärmepumpen, vor wachsenden Herausforderungen. Insbesondere erfordert die Anbindung und Einbindung von dezentralen erneuerbaren Energiequellen typischerweise Infrastrukturverbesserungen auf Mittespannungs- oder Niederspannungsebene. Eine wesentliche Herausforderung hierbei ist, dass typischerweise zuverlässige und leicht verwendbare digitalen Netzmodelle, insbesondere für ältere Verteilnetze mit langer historischer Aufzeichnung, nicht verfügbar sind. Dadurch müssen Netzplaner und/oder Netzbetreiber typischerweise mittels geeigneter Netzmodelle das bestehende Stromnetz, insbesondere im Hinblick auf seine Netztopologie, mit begrenzten Informationen rekonstruieren.

Die Rekonstruktion beziehungsweise Ermittlung von Netztopologien ist aufgrund der begrenzten verfügbaren Informationen bezüglich des Stromnetzes ein komplexes technisches Problem. Während Kenntnisse über den Standort von Ortsnetzstationen und Endverbrauchern typischerweise ermittelt werden können, ist die Topologie bestehender Verteilnetze typischerweise nicht bekannt. Dies wird insbesondere dadurch verstärkt, dass viele Mittelspannungs- und/oder Niederspannungsleitungen unterirdisch verlegt sind, was eine physische Überprüfung der Topologie schwierig und kostspielig macht.

Um die genannten technischen Herausforderungen zu bewältigen, haben sich probabilistische Ansätze als Lösung herausgestellt. Diese probabilistischen Methoden modellieren die genannte Unsicherheit bezüglich der Netztopologie mittels Wahrscheinlichkeitsverteilungen. Durch eine Berücksichtigung verfügbarer Systemmessungen als zusätzliche Evidenz können die genannten Methoden die Unsicherheit reduzieren und sicherstellen, dass die resultierenden Wahrscheinlichkeitsverteilungen nur Netzmodelle beziehungsweise Netztopologien umfassen, die das tatsächlich beobachtete Systemverhalten widerspiegeln.

Weiterhin weisen Mittel- und/oder Niederspannungsnetze aufgrund ihrer betrieblichen Flexibilität eine zusätzliche Komplexität auf. Mittel- und/oder Niederspannungsnetze umfassen häufig vermaschte Teilsegmente sowie auf Grund der großen Zahl von Leitungssegmenten eine Vielzahl von Schaltbaren Elementen (Schaltern). Diese Elemente bieten die Möglichkeit, das Stromnetz, beispielsweise als Reaktion auf Störungen, Wartungsanforderungen und/oder sich ändernde Lastbedingungen, bezüglich seiner Topologie neu zu konfigurieren. Beispielsweise kann zu verschiedenen Zeitpunkten eine spezifische radiale Betriebstopologie aus einer zugrundeliegenden, möglicherweise vermaschten Netztopologie, eingestellt werden. Somit kann sich bei Mittel- und/oder Niederspannungsnetzen zusätzlich die bereits unbekannte Topologie von Zeitpunkt zu Zeitpunkt ändern.

Der vorliegenden Erfindung liegt die Aufgabe zugrunde, ein verbessertes Verfahren zur Ermittlung und Verwendung einer Netztopologie eines Stromnetzes, insbesondere für ein Mittespannungsnetz und/oder Niederspannungsnetz, mit unsicherer Konfiguration und begrenzten verfügbaren Informationen bereitzustellen.

Die Aufgabe wird durch ein Verfahren mit den Merkmalen des unabhängigen Patentanspruches 1, durch eine Netzanschlussprüfung mit den Merkmalen des unabhängigen Patentanspruches 9, durch ein Steuerungsverfahren mit den Merkmalen des unabhängigen Patentanspruches 11 und durch ein Computerprogrammprodukt mit den Merkmalen des unabhängigen Patentanspruches 13 gelöst. In den abhängigen Patentansprüchen sind vorteilhafte Ausgestaltungen und Weiterbildungen der Erfindung angegeben.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt beziehungsweise computerimplementiert sein.

Das erfindungsgemäße Verfahren zur Ermittlung einer Netztopologie eines Stromnetzes, wobei die Netztopologie des Stromnetzes durch mehrere Leitungen und Schalter gebildet wird, ist gekennzeichnet durch folgende Schritte:
- Bereitstellen einer Wahrscheinlichkeitsverteilung möglicher Betriebstopologien des Stromnetzes für mehrere Zeitpunkte;
- Ermittlung einer Wahrscheinlichkeit für das Vorhandensein einer Leitung zu jedem Zeitpunkt für jeden Zeitpunkt basierend auf der jeweiligen Wahrscheinlichkeitsverteilung;
- Ermittlung einer Leitung als schalterfrei, wenn die Anzahl der Zeitpunkte, zu denen die Leitung eine Wahrscheinlichkeit größer oder gleich einem ersten Schwellenwert, insbesondere 0,5, aufweist, größer oder gleich einem festgelegten Häufigkeitswert ist;
- Ermittlung einer Leitung als schaltbar, wenn die Leitung für mindestens einen der Zeitpunkte eine Wahrscheinlichkeit kleiner oder gleich einem zweiten Schwellenwert, insbesondere 0,25, und für mindestens einen weiteren der Zeitpunkte eine Wahrscheinlichkeit größer oder gleich einem dritten Schwellenwert, insbesondere 0,75, aufweist;
- Hinzufügen der ermittelten schalterfreien Leitungen als feste Leitungen zur Netztopologie; und
- Hinzufügen der ermittelten schaltbaren Leitungen als Schalter zur Netztopologie.

Ein Stromnetz bezieht sich auf ein zusammenhängendes Netzwerk zur Verteilung von elektrischer Energie von Erzeugern zu Verbrauchern. Das Stromnetz ist insbesondere als Mittelspannungsnetz und/oder Niederspannungsnetz ausgebildet.

Der Begriff der Netztopologie bezieht sich auf die physische Anordnung und Verbindung von Komponenten innerhalb eines Stromnetzes. Die Netztopologie kann die Anordnungen und Verbindungen von Leitungen, Transformatoren, Schaltern und/oder weiteren elektrischen Anlagen, umfassen. Weiterhin kann die Netztopologie in Abhängigkeit der Auslegung und betrieblichen Anforderungen des Stromnetzes radial (baumartig), vermascht und/oder als eine Kombination hieraus ausgebildet sein.

Leitungen beziehen sich auf die physischen Stromleiter, die elektrische Energie zwischen verschiedenen Punkten im Netzwerk übertragen. Die Leitungen können als Freileitungen, die an Masten und/oder Türmen aufgehängt sind, und/oder als unterirdische als Kabel ausgebildet sein.

Schalter sind Komponenten des Stromnetzes, die verwendet werden, um den Stromfluss in einem Stromnetz zu regeln und/oder zu steuern, indem sie verschiedene Leitungen und/oder Abschnitte des Netzes verbinden oder trennen. Sie können manuell oder automatisch betrieben werden. Sie können der Rekonfiguration der Netztopologie für Wartungsarbeiten, Fehlerisolierung und/oder zum Lastausgleich dienen.

Eine Betriebstopologie bezieht sich auf eine spezifische Konfiguration/Netztopologie eines Stromnetzes zu einem Zeitpunkt. Diese wird insbesondere durch den Zustand der Schalter bestimmt, das heißt dadurch, ob die jeweiligen Schalter offen oder geschlossen sind. Durch die Stellung der Schalter kann sich somit die Netztopologie des Stromnetzes zeitlich ändern. Das Konzept der Betriebstopologie ist besonders für Mittelspannungsnetze und/oder Niederspannungsnetze von Vorteil, da diese aufgrund des Vorhandenseins von Schaltern beziehungsweisen von schaltbaren Leitungen mehrere mögliche Netztopologien aufweisen können.

Eine Wahrscheinlichkeitsverteilung kann eine mathematische Funktion sein, die die Wahrscheinlichkeit verschiedener möglicher Betriebstopologien des Stromnetzes beschreibt. Sie quantifiziert die Unsicherheit, die mit der Konfiguration des Stromnetzes verbunden ist. Hierbei werden gegebenenfalls weitere verfügbare Informationen und/oder Messungen berücksichtigt.

Schaltfreie Leitungen sind Leitungen, die über mehrere verschiedene Zeitpunkte und/oder Betriebsbedingungen hinweg konsistent in der Netztopologie vorhanden sind. Diese Leitungen bilden somit feste Elemente der Netzinfrastruktur aus.

Schaltbare Leitungen sind solche, die abhängig vom Zustand der Schalter (offen oder geschlossen) mit dem Stromnetz elektrisch verbunden oder von ihm getrennt werden können. Das Vorhandensein von schaltbaren Leitungen in der Betriebstopologie kann sich im Laufe der Zeit ändern und bietet Flexibilität in der Netzkonfiguration. Mit jeder schaltbaren Leitung ist somit wenigstens ein Schalter assoziiert, sodass durch ein Ermitteln der schaltbaren Leitungen ebenfalls die Schalter des Stromnetzes sowie ihre Anordnung innerhalb des Stromnetzes ermittelt werden können.

Der Häufigkeitswert bezieht sich auf den Anteil der Zeitpunkte, zu denen eine Leitung einen ermittelten Wahrscheinlichkeitsschwellenwert überschreiten muss, um als schalterfrei betrachtet zu werden. Er wird verwendet, um sicherzustellen, dass Leitungen, die als feste Elemente der Netztopologie klassifiziert sind, über mehrere Zeitpunkte hinweg konsistent vorhanden sind.

Eine Netzanschlussprüfung umfasst eine Bewertung der technischen Möglichkeit sowie der technischen Auswirkungen des Anschlusses einer neuen Anlage an ein bestehendes Stromnetz.

Ein Steuerungsverfahren für ein Stromnetz kann sich auf Strategien und Maßnahmen beziehen, die zur Regelung und/oder Steuerung des Netzbetriebs verwendet werden. Dies umfasst insbesondere eine Anpassung von Schalterstellungen, eine Regelung von Spannungsniveaus und/oder eine Optimierung von Leistungsflüssen, um die Systemstabilität und -effizienz des Stromnetzes aufrechtzuerhalten und sicherzustellen.

Die Erfindung weist einen oder mehrere der im Folgenden genannten Vorteile auf.

Das Verfahren bietet einen umfassenden probabilistischen Ansatz zur Ermittlung der Netztopologie. Durch die Verwendung von Wahrscheinlichkeitsverteilungen möglicher Betriebstopologien zu mehreren Zeitpunkten berücksichtigt die Erfindung die inhärente Unsicherheit in der Netzkonfiguration über mehrere Zeitpunkte hinweg. Dies ist eine wesentliche Verbesserung gegenüber bekannten Verfahren, die typischerweise auf Einzelpunktschätzungen oder vereinfachte Darstellungen von Netztopologien beruhen. Der probabilistische Ansatz ermöglicht eine genauere Ermittlung der Netztopologie und erfasst zudem die Dynamik von Mittelspannungsnetzen und/oder Niederspannungsnetzen, die aufgrund des Vorhandenseins von Schaltern mehrere mögliche Netztopologien aufweisen können.

Weiterhin unterscheidet das Verfahren zwischen schalterfreien und schaltbaren Leitungen innerhalb der Netztopologie. Diese Unterscheidung ist vorteilhaft für das Verständnis der betrieblichen Flexibilität des Netzes und wird bei herkömmlichen Netzmodellierungsansätzen typischerweise nicht berücksichtigt. Durch die Ermittlung, welche Leitungen zeitlich (quasi-)durchgängig, das heißt gemäß dem geforderten Häufigkeitswert, vorhanden (schalterfrei) und welche rekonfigurierbar (schaltbar) sind, liefert das Verfahren den Netzbetreibern wertvolle Informationen über die Anpassungsfähigkeit und/oder die Konfiguration des Stromnetzes. Diese Informationen sind vorteilhaft für fundierte Entscheidungen über Netzrekonfiguration, Wartungsplanung und/oder Strategien zur Störungsbehebung.

Weiterhin ermöglicht die Erfindung eine zeitbasierte Analyse der Wahrscheinlichkeit einer Leitung beziehungsweise der Wahrscheinlichkeit des Vorhandenseins einer Leitung. Durch die Untersuchung der Wahrscheinlichkeit des Vorhandenseins von Leitungen über mehrere Zeitpunkte hinweg kann das Verfahren zeitlich stabile Elemente des Netzes (Leitungen, die quasi-durchgängig vorhanden sind) sowie zeitlich variable Elemente (Leitungen, die im Laufe der Zeit verbunden oder getrennt werden können, insbesondere mittels Schalter) identifizieren. Diese zeitliche Analyse liefert Einblicke in den historischen Betrieb des Stromnetzes und kann dazu beitragen, zukünftige Konfigurationsanforderungen basierend auf beobachteten Mustern vorherzusagen.

Weiterhin verwendet das Verfahren einstellbare Schwellenwerte und ein Häufigkeitskriterium, um Leitungen als schalterfrei oder schaltbar zu erkennen beziehungsweise zu klassifizieren. Diese Flexibilität ermöglicht es, den Ansatz auf unterschiedliche Netzmerkmale und Betreiberpräferenzen abzustimmen.

Zudem adressiert die Erfindung die technische Herausforderung der begrenzten Informationsverfügbarkeit für Mittelspannungsnetze und/oder Niederspannungsnetze. Im Gegensatz zu Methoden, die umfangreiche Messdaten und detaillierte Vorkenntnisse der Netzstruktur erfordern, kann das vorliegende Verfahren mit weniger Informationen arbeiten und dennoch wertvolle Einblicke in die Netztopologie liefern. Durch die Verwendung von Wahrscheinlichkeitsverteilungen kann das Verfahren die verfügbaren Daten optimal nutzen und gleichzeitig Unsicherheiten dort explizit darstellen, wo Informationen fehlen.

Weiterhin stellt das Verfahren eine Netztopologie mit identifizierten festen Leitungen (schaltfreie Leitungen) und Schaltern (schaltbare Leitungen) bereit. Die ermittelte Netztopologie kann für verschiedene Netzmanagementaufgaben, wie beispielsweise Anschlussstudien, Betriebsplanungen und/oder Steuerungsstrategien verwendet werden. Die explizite Identifizierung von schaltbaren Leitungen unterstützt eine effizientere Planung der Netzrekonfiguration, da Netzbetreiber effizienter ermitteln können, welche Teile des Netzes modifiziert werden können, um sich beispielsweise an ändernde Lastbedingungen und/oder Störungsszenarien anzupassen.

Zudem ermöglicht die Erfindung eine Anpassung an ändernde Netzbedingungen. Wenn neue Messungen und/oder Informationen verfügbar werden, können die Wahrscheinlichkeitsverteilungen aktualisiert und das Verfahren zur Ermittlung der Topologie wiederholt werden. Dies ermöglicht eine kontinuierliche Verfeinerung des Netzmodells im Laufe der Zeit und stellt sicher, dass die Netzdarstellung genau und aktuell bleibt.

Die erfindungsgemäße Netzanschlussprüfung für wenigstens eine Anlage an ein Stromnetz, ist dadurch gekennzeichnet, dass die Netzanschlussprüfung mittels einer gemäß einem der Ansprüche 1 bis 8 ermittelten Netztopologie erfolgt.

Es ergeben sich zum erfindungsgemäßen Verfahren zur Ermittlung der Netztopologie gleichartige, gleichwertige und gleichwirkende Vorteile.

Das erfindungsgemäße Steuerungsverfahren zur Steuerung eines Stromnetzes, wobei das Stromnetz durch mehrere Leitungen und Schalter gebildet wird, ist dadurch gekennzeichnet, dass die Steuerung mittels einer gemäß einem der Ansprüche 1 bis 8 ermittelten Netztopologie durchgeführt wird.

Es ergeben sich zum erfindungsgemäßen Verfahren zur Ermittlung der Netztopologie gleichartige, gleichwertige und gleichwirkende Vorteile.

Das erfindungsgemäße Computerprogrammprodukt umfasst Befehle, die bei Ausführung durch eine Recheneinheit, insbesondere einen Computer, diesen veranlassen, ein Verfahren und/oder Schritte des Verfahrens gemäß einem der Ansprüche 1 bis 12 auszuführen.

Es ergeben sich zum erfindungsgemäßen Verfahren zur Ermittlung der Netztopologie gleichartige, gleichwertige und gleichwirkende Vorteile.

Gemäß einer bevorzugten Ausgestaltung der Erfindung erfolgt die Ermittlung der Wahrscheinlichkeit für das Vorhandensein einer Leitung für jeden Zeitpunkt mittels einer wahrscheinlichsten Betriebstopologie für den jeweiligen Zeitpunkt, wobei die wahrscheinlichste Betriebstopologie für jeden Zeitpunkt mittels der für jeden der Zeitpunkte bereitgestellten Wahrscheinlichkeitsverteilung ermittelt wird.

Mit anderen Worten wird für jeden der Zeitpunkte eine wahrscheinlichste Betriebstopologie mittels der jeweiligen Wahrscheinlichkeitsverteilung ermittelt. Die wahrscheinlichste Betriebstopologie eines Zeitpunkts ist somit die gemäß der zum genannten Zeitpunkt zugehörigen Wahrscheinlichkeitsverteilung wahrscheinlichste Netztopologie. Für jeden Zeitpunkt wird dadurch genau eine Netztopologie, nämlich die wahrscheinlichste Betriebstopologie, bereitgestellt. In jeder der Betriebstopologien ist eine Leitung vorhanden oder nicht vorhanden, sodass die Wahrscheinlichkeit des Vorhandenseins einer Leitung in diesem speziellen Fall, lediglich die Werte 1 (Leitung vorhanden) oder 0 (Leitung nicht vorhanden) annimmt. Dennoch wird die Unsicherheit bezüglich der Netztopologie zum jeweiligen Zeitpunkt über die wahrscheinlichste Betriebstopologie berücksichtigt. Ist eine Leitung über eine gemäß dem Häufigkeitswert ausreichende Anzahl von Zeitpunkten in der jeweiligen Betriebstopologie vorhanden, das heißt ihre Wahrscheinlichkeit weist für jeden der genannten Zeitpunkte den Wert 1 auf, dann wird diese als schaltfreie, das heißt feste Leitung, der Netztopologie ermittelt. Ist eine Leitung über eine gemäß dem Häufigkeitswert nicht ausreichende Anzahl von Zeitpunkten in der jeweiligen Betriebstopologie vorhanden, das heißt ihre Wahrscheinlichkeit weist für wenigstens einen der genannten Zeitpunkte den Wert 1 und für wenigstens einen weiteren der Zeitpunkte den Wert 0 auf, dann wird diese als schaltbare Leitung, das heißt Schalter der Netztopologie, ermittelt. Durch dieses Vorgehen können die festen Leitungen und Schalter des Stromnetzes ermittelt werden und zeitgleich Rechenressourcen eingespart werden, da für jeden Zeitpunkt lediglich eine wahrscheinlichste Betriebstopologie ermittelt und analysiert werden muss.

Gemäß einer bevorzugten Ausgestaltung der Erfindung wird für jeden der Schwellenwerte ein Wert im Bereich von 0,25 bis 0,75 verwendet.

Die Verwendung von Schwellenwerten in diesem Bereich ermöglicht einen ausgewogenen Ansatz zur Klassifizierung von Leitungen als schalterfrei oder schaltbar. Der Bereich bietet eine ausreichende Flexibilität, um verschiedene Sicherheitsgrade in den Wahrscheinlichkeitsverteilungen zu berücksichtigen und gleichzeitig aussagekräftige Unterscheidungen zwischen festen und variablen Elementen des Stromnetzes zu ermöglichen. Alternative oder ergänzende Implementierungen könnten adaptive Schwellenwerte verwenden, die sich basierend auf der Gesamtverteilung der Wahrscheinlichkeiten im Stromnetz anpassen und/oder Techniken des maschinellen Lernens verwenden, um Schwellenwerte basierend auf historischen Daten und bekannten Eigenschaften des Stromnetzes zu ermitteln und zu optimieren.

Gemäß einer bevorzugten Ausgestaltung der Erfindung wird der Wert 0,5 als erster Schwellenwert, 0,5 als zweiter Schwellenwert und 0,75 als dritter Schwellenwert verwendet.

Leitungen mit einer Wahrscheinlichkeit von 0,5 oder höher werden als wahrscheinlich vorhanden betrachtet, während die Schwellenwerte 0,5 und 0,75 für schaltbare Leitungen einen eindeutigen Bereich für die Identifizierung von Elementen mit variablem Vorhandensein schaffen. Dieser Ansatz schafft ein Gleichgewicht zwischen Empfindlichkeit gegenüber Änderungen und Robustheit gegenüber geringfügigen Schwankungen in den Wahrscheinlichkeitsschätzungen.

Gemäß einer bevorzugten Ausgestaltung der Erfindung hat der Häufigkeitswert einen Wert im Bereich von 0,8 bis 1,0, insbesondere im Bereich von 0,9 bis 1,0.

Die Festlegung des Häufigkeitswerts in diesem hohen Bereich stellt sicher, dass als schalterfrei klassifizierte Leitungen über die überwiegende Mehrheit der beobachteten Zeitpunkte hinweg konsistent vorhanden sind. Dieser hohe Schwellenwert hilft dabei, wirklich feste Elemente des Netzwerks von solchen zu unterscheiden, die gelegentlich stabil erscheinen mögen, aber tatsächlich einer Rekonfiguration unterliegen. Besonders bevorzugt weist der Häufigkeitswert einen Wert von 0,9 auf.

Gemäß einer bevorzugten Ausgestaltung der Erfindung wird das Verfahren mit aktualisierten Wahrscheinlichkeitsverteilungen wiederholt, wobei das Aktualisieren der Wahrscheinlichkeitsverteilungen basierend auf einem oder mehreren Messwerten von wenigstens einer oder mehreren mit dem Stromnetz assoziierten Messgrößen erfolgt.

Dieser iterative Ansatz ermöglicht es dem Verfahren, sein Verständnis der Netztopologie kontinuierlich zu verfeinern, wenn neue Messdaten verfügbar sind. Durch die Einbeziehung von Echtzeit- oder Nahezu-Echtzeit-Messungen kann sich das Verfahren an Änderungen in der Netzkonfiguration anpassen und die Genauigkeit seiner Topologieermittlung im Laufe der Zeit verbessern.

Gemäß einer bevorzugten Ausgestaltung der Erfindung wird für das Aktualisieren eine Wahrscheinlichkeit des jeweiligen Messwertes für sein Auftreten in jeder der Betriebstopologien ermittelt, wobei die Betriebstopologie mit der größten Wahrscheinlichkeit für die Messwerte als wahrscheinlichste Betriebstopologie verwendet wird.

Dieser Ansatz bietet eine vorteilhafte Möglichkeit, neue Messungen in die bestehenden Wahrscheinlichkeitsverteilungen zu integrieren. Durch die Bewertung der Wahrscheinlichkeit beobachteter Messungen über verschiedene potenzielle Topologien hinweg kann das Verfahren identifizieren, welche Konfigurationen am konsistentesten mit dem aktuellen Zustand des Stromnetzes sind. Dadurch wird eine aktuellere und genauere Netztopologie ermittelt. Eine alternative oder ergänzende Implementierung könnte Bayessche Aktualisierungsmethoden verwenden, um vorheriges Wissen über Wahrscheinlichkeiten von Topologien mit neuen Informationen aus Messungen zu kombinieren.

Gemäß einer bevorzugten Ausgestaltung der Erfindung werden als Messgröße eine Spannung, ein Strom, ein Winkel und/oder eine Leistung verwendet.

Diese elektrischen Größen liefern wertvolle Informationen über den Netzzustand und die Konfiguration des Stromnetzes.

Gemäß einer bevorzugten Ausgestaltung der Erfindung wird für den Anschluss einer Anlage eine Schalterstellung der ermittelten Schalter in Abhängigkeit von Netzrandbedingungen bestimmt.

Dadurch wird vorteilhafterweise sichergestellt, dass neue Anschlüsse an das Stromnetz derart erfolgen, dass diese mit der aktuellen Netzkonfiguration und den Betriebsbedingungen (Netzrandbedingungen) des Stromnetzes technisch kompatibel sind. Durch die Berücksichtigung von Netzrandbedingungen, wie beispielsweise Spannungsniveaus, Leistungsflusseinschränkungen und/oder Stabilitätsanforderungen, kann das Verfahren optimale Schalterstellungen für die sichere und effiziente Integration neuer Anlagen ermitteln.

Gemäß einer bevorzugten Ausgestaltung der Erfindung wird zur Steuerung des Stromnetzes eine Optimierung der Stellungen der ermittelten Schalter des Stromnetzes durchgeführt.

Dieser Optimierungsprozess ermöglicht eine dynamische Rekonfiguration des Stromnetzes. Durch die Verwendung der ermittelten schaltbaren Leitungen (Schalter) kann das Steuerungsverfahren verschiedene Netzkonfigurationen berücksichtigen, um eine möglichst optimale Schalterschaltung zu ermitteln.

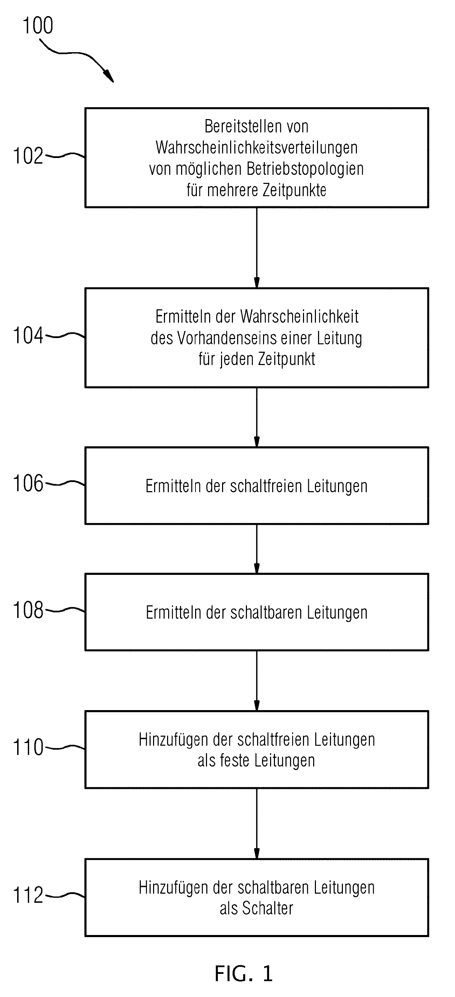

Weitere Vorteile, Merkmale und Einzelheiten der Erfindung ergeben sich aus den im Folgenden beschriebenen Ausführungsbeispielen sowie anhand der Zeichnung. Dabei zeigt die Figur schematisiert ein Flussdiagramm eines Verfahrens zur Ermittlung einer Netztopologie eines Stromnetzes gemäß einer Ausgestaltung der Erfindung.

Gleichartige, gleichwertige oder gleichwirkende Elemente können in der Figur mit denselben Bezugszeichen versehen sein.

Die Figur zeigt ein Flussdiagramm für ein Verfahren 100 zur Ermittlung einer Netztopologie eines Stromnetzes. Das Verfahren 100 umfasst mehrere Schritte 102, 104,...,112, die Wahrscheinlichkeitsverteilungen möglicher Betriebstopologien über mehrere Zeitpunkte analysieren, um feste Leitungen (schaltfreie Leitungen) und Schalter (schaltbare Leitungen) innerhalb des Stromnetzes zu identifizieren beziehungsweise zu ermitteln.

Im Schritt 102 werden Wahrscheinlichkeitsverteilungen von möglichen Betriebstopologien für das Stromnetz für mehrere Zeitpunkte bereitgestellt. Die Wahrscheinlichkeitsverteilungen repräsentieren die Unsicherheit in der Netzkonfiguration und können aus verschiedenen Informationsquellen abgeleitet werden, wie beispielsweise historischen Daten, Messungen und/oder Expertenwissen. Die Verwendung mehrerer Zeitpunkte ermöglicht es dem Verfahren, zeitliche Variationen in der Netztopologie zu erfassen, was besonders vorteilhaft für Mittelspannungsnetze und/oder Niederspannungsnetze ist, da diese verschiedene Netztopologien zu verschiedenen Zeiten aufweisen können. Die Wahrscheinlichkeitsverteilungen können numerisch in Form von Daten, analytisch als Funktion und/oder diskret oder kontinuierlich in ihren Werten bereitgestellt werden.

Im Schritt 104 ermittelt das Verfahren die Wahrscheinlichkeit des Vorhandenseins einer Leitung für jeden Zeitpunkt basierend auf der jeweiligen Wahrscheinlichkeitsverteilung. Der Schritt 104 umfasst hierbei die Analyse, wie wahrscheinlich eine Leitung zu verschiedenen Zeiten im Stromnetz vorhanden ist. Die Wahrscheinlichkeit des Vorhandenseins einer Leitung kann mit verschiedenen statistischen Techniken berechnet werden, wie beispielsweise marginalen Wahrscheinlichkeiten, bedingten Wahrscheinlichkeiten unter einer Berücksichtigung von Netzzuständen und/oder gemäß einer zum jeweiligen Zeitpunkt wahrscheinlichsten Betriebstopologie.

Der Schritt 106 betrifft die Ermittlung von schaltfreien Leitungen. Eine Leitung wird als schalterfrei ermittelt, wenn die Anzahl der Zeitpunkte, zu denen sie eine Wahrscheinlichkeit für ihr Vorhandensein mit einem Wert größer oder gleich einem ersten Schwellenwert, insbesondere 0,5 aufweist, größer oder gleich einem festgelegten Häufigkeitswert ist. Dadurch wird sichergestellt, dass als schalterfrei klassifizierte Leitungen über mehrere Zeitpunkte hinweg konsistent vorhanden sind, wodurch die Wahrscheinlichkeit verringert wird, vorübergehend stabile Leitungen fälschlicherweise als dauerhaft fest zu klassifizieren. Der Schwellenwert von 0,5 stellt einen Gleichgewichtspunkt dar, bei dem die Leitung wahrscheinlicher vorhanden als abwesend ist, während der Häufigkeitswert (typischerweise hoch angesetzt, beispielsweise 0,9 bis 1,0) sicherstellt, dass diese hohe Wahrscheinlichkeit über die meisten der Zeitpunkte hinweg beibehalten wird.

Im Schritt 108 werde die Leitungen ermittelt, die schaltbar sind. Eine Leitung wird als schaltbar klassifiziert, wenn sie für mindestens einen der Zeitpunkte eine Wahrscheinlichkeit kleiner oder gleich einem zweiten Schwellenwert, insbesondere 0,5, und für mindestens einen weiteren der Zeitpunkte eine Wahrscheinlichkeit größer oder gleich einem dritten Schwellenwert, insbesondere 0,75, aufweist. Die genannte Bedingung erfasst somit Leitungen, die eine ausreichende Variabilität in ihrer Wahrscheinlichkeit für ihr Vorhandensein aufweisen. Die genannte Variabilität deutet darauf hin, dass die jeweilige Leitung durch Schalter verbunden und/oder getrennt werden kann. Die Verwendung von zwei unterschiedlichen Schwellenwerten (0,5 und 0,75) schafft eine klare Trennung zwischen den Zuständen "wahrscheinlich abwesend" und "wahrscheinlich vorhanden" und reduziert so die Mehrdeutigkeit in der Klassifizierung.

Der Schritt 110 umfasst das Hinzufügen der ermittelten schalterfreien Leitungen als feste Leitungen zur Netztopologie. Die festen Leitungen bilden sinnbildlich das Rückgrat der Netztopologie und sind besonders vorteilhaft für das Verständnis der grundlegenden Struktur des Stromnetzes.

Im Schritt 112 werden die ermittelten schaltbaren Leitungen als Schalter zur Netztopologie hinzugefügt. Dieser Schritt integriert die flexiblen, rekonfigurierbaren Elemente des Stromnetzes als Schalter in die Netztopologie. Durch die Identifizierung dieser schaltbaren Leitungen liefert das Verfahren wertvolle Informationen für Netzbetreiber darüber, welche Teile des Netzes rekonfiguriert werden können, um sich ändernden betrieblichen Anforderungen anzupassen und/oder auf Störungsbedingungen zu reagieren.

Das dargestellte Verfahren 100 ermöglicht einen systematischen und wiederholbaren Ansatz zur Ermittlung der Netztopologie. Diese Methode kann besonders nützlich sein für Szenarien, in denen die direkte Beobachtung der Netzkonfiguration schwierig oder kostspielig ist, wie beispielsweise bei unterirdisch verlegten Mittelspannungsnetzen und/oder Niederspannungsnetzen. Durch die Nutzung probabilistischer Informationen und zeitlicher Analyse kann das Verfahren selbst bei begrenzten oder unsicheren Daten technische Einblicke in die Netzstruktur liefern.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 100: Verfahren
- 102,...,112: Schritte des Verfahrens

## Patentansprüche

1. Computerimplementiertes Verfahren zur Ermittlung einer Netztopologie eines Stromnetzes, wobei die Netztopologie des Stromnetzes durch mehrere Leitungen und Schalter gebildet wird, **gekennzeichnet durch** folgende Schritte:
- (102) Bereitstellen einer Wahrscheinlichkeitsverteilung möglicher Betriebstopologien des Stromnetzes für mehrere Zeitpunkte;
- (104) Ermitteln einer Wahrscheinlichkeit für das Vorhandensein einer Leitung zu jedem Zeitpunkt für jeden Zeitpunkt basierend auf der jeweiligen Wahrscheinlichkeitsverteilung;
- (106) Ermitteln einer Leitung als schalterfrei, wenn die Anzahl der Zeitpunkte, zu denen die Leitung eine Wahrscheinlichkeit größer oder gleich einem ersten Schwellenwert, insbesondere 0,5, aufweist, größer oder gleich einem festgelegten Häufigkeitswert ist;
- (108) Ermitteln einer Leitung als schaltbar, wenn die Leitung für mindestens einen der Zeitpunkte eine Wahrscheinlichkeit kleiner oder gleich einem zweiten Schwellenwert, insbesondere 0,5, und für mindestens einen weiteren der Zeitpunkte eine Wahrscheinlichkeit größer oder gleich einem dritten Schwellenwert, insbesondere 0,75, aufweist;
- (110) Hinzufügen der ermittelten schalterfreien Leitungen als feste Leitungen zur Netztopologie; und
- (112) Hinzufügen der ermittelten schaltbaren Leitungen als Schalter zur Netztopologie.

2. Verfahren gemäß Anspruch 1, **dadurch gekennzeichnet, dass** die Ermittlung der Wahrscheinlichkeit für das Vorhandensein einer Leitung für jeden Zeitpunkt mittels einer für den jeweiligen Zeitpunkt wahrscheinlichsten Betriebstopologie erfolgt, wobei die wahrscheinlichste Betriebstopologie für jeden Zeitpunkt mittels der für jeden der Zeitpunkte bereitgestellten Wahrscheinlichkeitsverteilung ermittelt wird.

3. Verfahren gemäß Anspruch 1 oder 2, **dadurch gekennzeichnet, dass** für jeden der Schwellenwerte ein Wert im Bereich von 0,25 bis 0,75 verwendet wird.

4. Verfahren gemäß einem der vorhergehenden Ansprüche, **dadurch gekennzeichnet, dass** der Wert 0,5 als erster Schwellenwert, der Wert 0,5 als zweiter Schwellenwert und der Wert 0,75 als dritter Schwellenwert verwendet wird.

5. Verfahren gemäß einem der vorhergehenden Ansprüche, **dadurch gekennzeichnet, dass** der Häufigkeitswert einen Wert im Bereich von 0,8 bis 1,0, insbesondere im Bereich von 0,9 bis 1,0, aufweist.

6. Verfahren gemäß einem der vorhergehenden Ansprüche, **dadurch gekennzeichnet, dass** das Verfahren mit aktualisierten Wahrscheinlichkeitsverteilungen wiederholt wird, wobei das Aktualisieren der Wahrscheinlichkeitsverteilungen basierend auf einem oder mehreren Messwerten von wenigstens einer oder mehreren mit dem Stromnetz assoziierten Messgrößen erfolgt.

7. Verfahren gemäß Anspruch 6, **dadurch gekennzeichnet, dass** für das Aktualisieren eine Wahrscheinlichkeit des jeweiligen Messwertes für sein Auftreten in jeder der Betriebstopologien ermittelt wird, wobei die Betriebstopologie mit der größten Wahrscheinlichkeit für die Messwerte als wahrscheinlichste Betriebstopologie verwendet wird.

8. Verfahren gemäß Anspruch 6 oder 7, **dadurch gekennzeichnet, dass** als Messgröße eine Spannung, ein Strom, ein Winkel und/oder eine Leistung verwendet wird.

9. Netzanschlussprüfung wenigstens einer Anlage an ein Stromnetz, **dadurch gekennzeichnet, dass** die Netzanschlussprüfung mittels einer gemäß einem der Ansprüche 1 bis 8 ermittelten Netztopologie erfolgt.

10. Netzanschlussprüfung gemäß Anspruch 9, **dadurch gekennzeichnet, dass** für den Anschluss der Anlage eine Schalterstellung der ermittelten Schalter in Abhängigkeit von Netzrandbedingungen ermittelt wird.

11. Steuerungsverfahren zur Steuerung eines Stromnetzes, wobei das Stromnetz durch mehrere Leitungen und Schalter gebildet wird, **dadurch gekennzeichnet, dass** die Steuerung mittels einer gemäß einem der Ansprüche 1 bis 8 ermittelten Netztopologie erfolgt.

12. Steuerungsverfahren gemäß Anspruch 11, **dadurch gekennzeichnet, dass** für die Steuerung des Stromnetzes eine Optimierung der Stellungen der ermittelten Schalter des Stromnetzes erfolgt.

13. Computerprogrammprodukt, umfassend Befehle, die bei Ausführung durch eine Recheneinheit, insbesondere einen Computer, diesen veranlassen, ein Verfahren und/oder Schritte des Verfahrens gemäß einem der Ansprüche 1 bis 12 auszuführen.
